Europäisches Patentamt

European Patent Office

Office européen des brevets

(19)

(11) Publication number: **0 087 497**

A2

# (12) EUROPEAN PATENT APPLICATION

(21) Application number: 82107864.9

(22) Date of filing: 26.08.82

(51) Int. Cl.³: **G 01 B 3/10**

(30) Priority: 25.02.82 US 352127

(43) Date of publication of application:
07.09.83 Bulletin 83/36

(84) Designated Contracting States:
AT DE FR GB IT SE

(71) Applicant: SPENCER PRODUCTS COMPANY
1134 Poplar Place South
Seattle Washington 98144(US)

(72) Inventor: Lamson, Robert D.
333 Cascadia Avenue South
Seattle Washington 98164(US)

(74) Representative: Patentanwälte Grünecker, Dr.
Kinkeldey, Dr. Stockmair, Dr. Schumann, Jakob, Dr.
Bezold, Meister, Hilgers, Dr. Meyer-Plath
Maximilianstrasse 58
D-8000 München 22(DE)

(54) Tape measure.

(57) A gearless, open-faced, direct-drive, spring-rewound tape measure eliminates the need for a manual-rewind handle or gears to increase the spring tensioning force. A spiral spring is retained within a spring-retaining disk which is revolvable about a hub attached to a cover. A cover plate coupled through an input disk allows revolving of the spring-retaining disk to adjust the tension of a spring which is retained within a spring-retaining well of the spring-retaining disk. Alternatively, the hub may be attached to the cover plate and the spring tension adjusted by revolving the cover plate while the spring-retaining disk remains stationary. In ordinary use, the cover plate is restricted from revolving by compression lock rings which sandwich the cover plate.

EP 0 087 497 A2

./...

FIG. 1

## Discussion

## TAPE MEASURE

### Technical Field

The present invention relates to an improved tape measure.

### Background Art

Many types of spring-tension-rewind tape measures are available today. The longer tapes usually require manually rewinding to assist the spring; therefore, the tape measures include an external handle. This handle is in constant danger of being broken or damaged when the tape measure is used.

United States Patent 3,054,573 discloses an improved tape measure which eliminates projecting parts by use of gears to augment the spring tension and which encloses the spring and driving gears in separate sealed compartments. Although an improvement over the external-handle tape measures, the tape measure still presents serious problems to economic construction and efficient use. For example, the gears of the tape measure are capable of being fouled with dirt, which is often encountered in logging and other uses of the tape measures. Modern improvements in spring metal have eliminated the necessity of using a gear system to provide necessary spring tensioning force to retract even long tapes. The advent of the modern springs has allowed improvements to the tape measure which are incorporated in the improved tape measure of this invention.

### Disclosure of Invention

The gearless, open-faced, direct-drive, spring-rewound tape measure is thinner and lighter than conventional prior art tape measures and can be produced more cheaply. Generally, the tape measure includes a generally disk-shaped dust cover having a centrally disposed hub which projects upwardly substantially perpendicular to the cover from one side of the cover. A revolvable, spring-retaining disk, which has a diameter slighlty less than the diameter of the cover, is seated on the cover and has a spring-retaining well whose outer periphery is defined by an upraised wall. The wall is substantially concentric with the disk and has at least one slot to allow passage of the spring or tape through the wall. A spiral spring is retained within the well of the spring-retaining disk and has two ends. One end of the spring is affixed to the hub, preferably by placing a tang of the spring in a slot of the hub. The other end of the spring is attached to a graduated tape. Usually, the tape passes through the slot in the wall of the spring-retaining disk and is wound about the outer periphery of the wall. Thus, the tape is exposed and the tape measure is called "open-faced." The slotted wall protects the spring from fouling by dirt.

To set the tape measure at a predetermined tensioning force or to adjust the tensioning force after assembly of the tape measure, an input tensioning assembly is incorporated into the improved tape measure. Preferably, the input tensioning assembly includes a revolvable input disk which has a diameter slightly less than the diameter of the cover and which is seated atop the wall of the spring-retaining disk about the hub. When the input disk is tightly compressed against the top of the wall of the spring-retaining disk and is revolved, the spring-retaining disk also turns. Because the spring is constrained against the fixed hub, the spring either tightens or loosens.

A generally disk-shaped cover plate, which has a diameter slightly less than the diameter of the cover, rests atop the input disk and allows revolution of the input disk and spring-retaining disk during use of the tape while being compressible down upon the input disk so that the tension of the spring may be adjusted. That is, the cover plate is capable of turning both the input disk and the spring-retaining disk when it is compressed tightly against the input disk and is turned relative to the cover. To hold the cover plate above the cover and input disk during normal use of the tape measure, a pair of compression lock rings sandwich the cover plate. Each lock ring has an outside diameter substantially equal to the diameter of the bottom cover. When compressed against the cover plate, the lock rings hold the cover plate and keep the cover plate from revolving. When loosened, the cover plate may be pressed against the input disk and turned to simultaneously turn the input and spring-retaining disks. Fasteners join the lock rings and cover in substantially parallel, axially aligned positions. These fasteners allow holding of the cover plate tightly between the lock rings during normal use of the tape but allow the cover plate to be compressed against the input disk when desired. After a tension adjustment, the fasteners allow refastening of the lock rings to hold the cover plate and to allow normal use of the tape measure. Preferably, the fasteners include a plurality of collars positionable at predetermined locations around the periphery of the cover and a plurality of screws to fasten the lock rings or the cover to the collars, depending upon the side of the tape measure being considered.

Alternatively, the tape measure may have a generally disk-shaped dust cover which has a central hub-receiving well. A revolvable spring-retaining disk and an input disk, as previously described, overlie the cover. A cover plate completes the tape measure and includes a centrally disposed hub which projects downwardly substantially perpendicular to the cover plate. The spring is attached to the hub. As previously described, the cover plate has a diameter slightly less than the diameter of the cover and is retained in locking rings. When the rings are loosened, the cover plate may be turned to tighten or to loosen the spring.

To improve performance of the tape measure of this invention, the tape measure may include a slide ridge depending from the spring-retaining disk to abut the cover and to reduce the frictional surface area of contact between the spring-retaining disk and the cover. Thus, the slide ridge ensures that the spring-retaining disk is more freely revolvable about the hub. Also, the input disk may include an inset groove to mate with the top of the wall so that the wall revolves in the groove when the tape measure is assembled. This groove helps to limit the wobble effect of the spring-retaining disk. Finally, the input disk may also include a plurality of stabilizers which project upwardly from the input disk between the top of the input disk and the cover plate to reduce wobble of the input disk.

Thus, a gearless, open-faced, direct-drive, spring-rewound tape measure is easily constructed and is a decided improvement over existing tape measures. The entire tape measure may be made from aluminum or plastic and, therefore, may be much lighter and less expensive. The constructed tape measure is thinner than earlier tape measures because the need for gears or handles is eliminated through use of the improved spiral spring. A simple and quick means is employed to adjust the spring tension without use of gears. The tape measure is less susceptible to fouling by dirt and is less susceptible to damage even when placed in heavy usage. These and other novel features of the invention will be described in the specification and claims which follow.

Brief Description of the Drawings

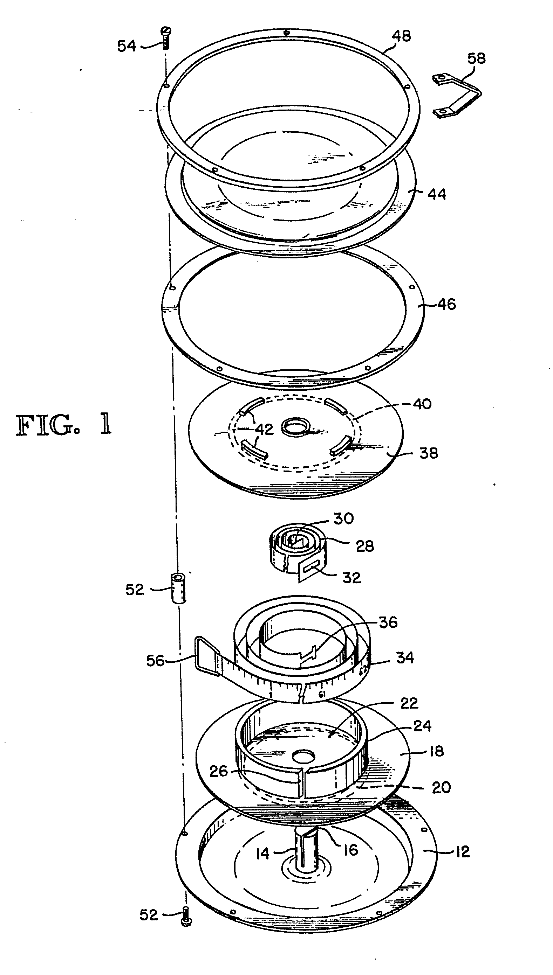

Figure 1 is an exploded assembly of the preferred tape measure of this invention.

Figure 2 is a typical cross-section of a preferred tape measure.

Figure 3 is an isometric of a preferred tape measure.

Figure 4 is a typical cross-section of another preferred tape measure.

Best Mode for Carrying Out the Invention

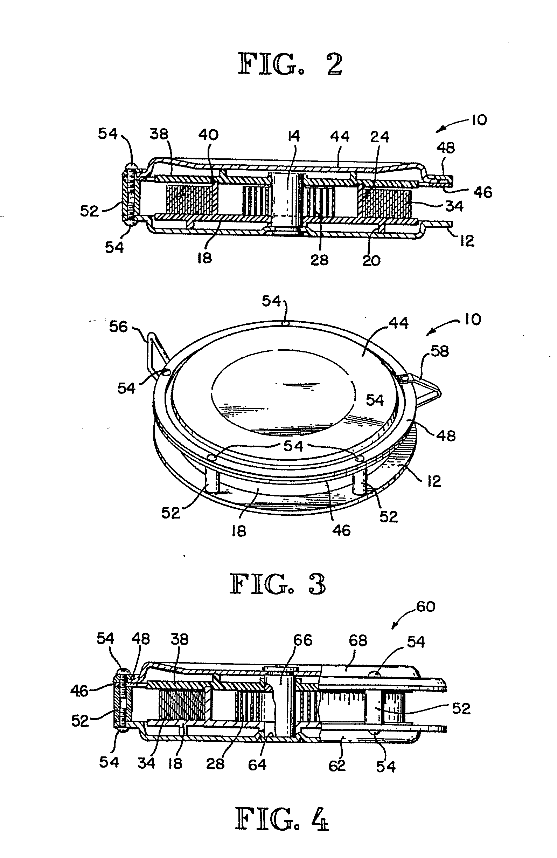

A gearless, open-faced, direct-drive, spring-rewound tape measure 10 has a cover 12 as a base. Positioned centrally within the disk-shaped cover 12 is a hub 14 having a slot 16 which is capable of receiving the tang of a spiral spring. The hub 14 projects upwardly substantially perpendicular to the cover 12 from one side of the cover 12. The hub 14 attaches to the cover 12 with a wedge and stake assembly (as best shown in Figure 2). A spring-retaining disk 18 seats on the cover 12 around the hub 14. The inside diameter of the central opening of the spring-retaining disk is substantially equal to the outside diameter of the hub 14. To reduce the surface area of contact between the spring-retaining disk 18 and the cover 12, a slide ridge 20 depends downwardly from the spring-retaining disk 18. A spring-retaining well 22 is formed by an intermediate upraised wall 24. The wall 24 is substantially circular in plan view and extends upwardly a distance at least slightly greater than the thickness of the spring or tape. A slot 26 in the wall 24 of the spring-retaining disk 18 allows threading of the tape or spring so that the spring and tape may communicate between the spring-retaining well 22 and the outside of the spring-retaining disk 18.

A spiral spring 28 is placed within the spring-retaining well 22 of the spring-retaining disk 18 and is affixed to the hub 14 by placing a tang 30 of the spring 28 into the slot 16 of the hub 14. At the other end of the spring 28, a slot is cut into the middle of the spring 28. The tape 34 is generally a graduated measuring tape and has a tongue 36 to be received in the slot 32 of the spiral spring 28. Generally, the tape 24 is wound around the outer periphery of the wall 24 of the spring-retaining disk 18 (as shown in Figure 2), thus making the assembled tape measure 10 "open-faced."

Above the spring-retaining disk 18 rests an input disk 38. An inset groove 40 of the input disk 38 preferably matches substantially and mates with a top portion of the wall 24 of the spring-retaining disk 18. The input disk 38 is of a diameter slighlty less than that of the cover 12 and is positioned around the hub 14 to permit concentric turning.

The input disk 38 is the first part of the input tensioning assembly which allows pretensioning of the spring 28 and which allows adjustment of the spring tension during use of the tape measure 10. The input disk 38 is revolvable about the hub 14 and is capable of revolving the spring-retaining disk 18 when the input disk 38 is compressed tightly against the top of the wall 24.

To stabilize the input disk 38 against wobble, preferably a plurality of spaced stabilizers 42 project upwardly from the top surface of the input disk 38 into the space between the input disk 38 and a cover plate.

The input tensioning assembly is completed with a generally disk-shaped cover plate which is sandwiched between two compression lock rings 46 and 48. The cover plate 44 has a diameter slightly less than the diameter of the cover 12 and is capable of being compressed to contact the input disk 38 and to revolve the input disk 38 and spring-retaining disk 18 simultaneously to adjust the tension of the spring 28 within the spring-retaining well 22. The lock rings 46 and 48 have an outside diameter substantially equal to the diameter of the cover 12. In common use, the cover plate 44 is retained against revolution by the lock rings 46 and 48. A downwardly depending flange 50 on the upper lock ring 48 helps to retain the cover plate 44 between the lock rings 46 and 48.

Fasteners, such as a plurality of collars 52, are positioned at predetermined locations about the periphery of the lock rings 46 and 48 and cover 12 to join the cover 12 and lock rings 46 and 48 in substantially parallel, axially aligned positions. Screws 54 are used to connect the cover 12 to the collars 52 and the lock rings 46 and 48 to the collars 52 (as best shown in Figure 2). The screws 54 fit through corresponding openings on the cover 12 and lock rings 46 and 48 and thread into the spacer collars 52. The plurality of collars 52 help to confine the tape 34 within the outside diameter of the cover 12 unless an end is pulled.

To adjust the spring tension, the screws 54 connecting the lock rings 46 and 48 to the collars 52 are loosened to remove the compression of the upper lock ring 48 against the cover plate 44. When the screws are sufficiently loosened, the cover plate will be revolvable in its seat upon the lower lock ring 46. Pressing the center of the cover plate 44 against the input disk 38 will exert a downward force upon the spring-retaining disk so that revolution of the cover plate 44 relative to the cover 12 will simultaneously revolve the input disk 38 and the spring-retaining disk 18. Because the tang 30 of the spiral spring 28 is retained in a slot 16 of the hub 14 and because the hub 14 is stationary, the spring 28 will become more tightly or more loosely wound, depending upon the direction of revolution. Once a desired tension is achieved, the screws 52 are tightened to compress the rings 46 and 48 against the cover plate 44, thereby eliminating its revolution.

A handle 56 on the exposed end of tape 34 constrains the tape's end from entering the well 22. Also, there is sufficient friction within the assembled tape measure 10 to constrain the spring-retaining disk 18 from revolving until a sufficient force is supplied to withdraw the tape 34. That is, the pretensioning of the spring 28 never exceeds the static friction which the spring-retaining disk 18 has with respect to the cover 12. This predetermined static friction may be varied by the thickness of the slide ridge 20 or in other known ways.

A clip receiver 58 may be placed upon the tape measure 10 above and below the cover 12 and cover plate 44 at a collar 52.

As best shown in Figure 4, an alternative tape measure 60 has a generally disk-shaped dust cover 62 that has a central hub-receiving well 64. A spring-retaining disk 18 and input disk 38 with spring 28 and tape 34, as previously described, are mounted above the cover 60 and are held in position by a hub 66 which is downwardly depending from a cover plate 68. The cover plate 68 has a diameter slightly less than the diameter of the cover 62. As previously described, lock rings 46 and 48 are used to retain the cover plate 68. When the rings 46 and 48 are loosened, the cover plate 68 may be turned to adjust the tension of the spring 28. The spring 28 is connected to the hub 66 and will be tightened or loosened as the hub 66 revolves because the spring-retaining disk 18 remains stationary. The well 64 has a diameter just slightly greater than the diameter of the hub 66.

Although shown with the spring-retaining disk 18 below the input disk 38, the order of these parts may be reversed.

To reduce friction between the revolving parts and the stationary parts, a lubricant, such as graphite or oil, may be used, if desired. Also, to promote withdrawal and retraction of the tape 34, a collar 52 may include a nylon sleeve (not shown) which rotates when the tape 34 rubs against the sleeve.

9 0087497

Claims

I claim:

1. A gearless, open-faced, direct-drive, spring-rewound tape measure, comprising:

(a) a generally disk-shaped dust cover having a centrally disposed hub projecting upwardly substantially perpendicular to the cover from one side of the cover;

(b) a revolvable, spring-retaining disk having a diameter slightly less than the diameter of the cover, seated on the cover above the hub, and having a spring-retaining well which has an outer periphery that is defined by an upraised wall, the wall being substantially concentric with the disk and having at least one slot;

(c) a spiral spring retained within the well of the spring-retaining disk and having two ends, one end being fixed to the hub;

(d) a tape attached to the other end of the spring, passing through the slot in the wall, and wound about the outer periphery of the wall;

(e) an input tensioning assembly to allow pretensioning of the spring and to allow adjustment of the spring tension, including:

(i) a revolvable input disk having a diameter slightly less than the diameter of the cover, seated atop the wall of the spring-retaining disk about the hub, the input disk being capable of revolving the spring-retaining disk when tightly compressed against the top of the wall,

(ii) a generally disk-shaped cover plate having a diameter slightly less than the diameter of the cover and being capable of revolving the input disk and, in turn,

the spring-retaining disk when compressed tightly against the input disk and revolved relative to the cover, and

(iii) a pair of compression lock rings to hold the cover plate, sandwiching the cover plate and having an outside diameter substantially equal to the diameter of the cover, wherein the lock rings hold the cover plate to prevent rotation of the cover plate during use of the tape; and

(f) fasteners to join the lock rings and cover in substantially parallel, axially aligned positions, allowing holding of the cover plate tightly between the lock rings during use of the tape and allowing the cover plate to be compressed against the input disk and revolved to adjust the tension of the spring by revolving the spring-retaining disk relative to the stationary cover.

2. The tape measure of claim 1 wherein the spring-retaining disk includes a depending slide ridge to abut the cover and to reduce the frictional surface area of contact between the spring-retaining disk and the cover.

3. The tape measure of claim 1 wherein the input disk includes an inset groove to mate with the wall so that the wall revolves in the groove when the tape measure is assembled.

4. The tape measure of claim 1 or claim 3 wherein the input disk includes stabilizers projecting upwardly from the input disk, which are positionable between the input disk and the cover plate to reduce wobble of the input disk.

5. The tape measure of claim 1 wherein the fasteners include a plurality of collars positionable at predetermined locations around the periphery of the cover and lock rings, and a plurality of screws to fasten the lock rings and cover to the collars.

6. A gearless, open-faced, direct-drive, spring-rewound tape measure, comprising:

(a) a generally disk-shaped dust cover having a centrally disposed hub projecting upwardly substantially perpendicular to the cover from one side of the cover;

(b) a revolvable, spring-retaining disk

    (i) having a diameter slightly less than the diameter of the cover, seated on the cover,

    (ii) having a spring-retaining well which has an outer periphery defined by an upraised wall, the wall being substantially concentric with the disk, and

    (iii) having at least one slot, and having a depending slide ridge to abut the cover and to reduce the frictional surface area of contact between the spring-retaining disk and the cover;

(c) a spiral spring retained within the well of the spring-retaining disk and having two ends, one end being fixed to the hub;

(d) a tape attached to the other end of the spring, passing through the slot in the wall, and wound about the outer periphery of the wall;

(e) an input tensioning assembly to allow pretensioning of the spring and to allow adjustment of the spring tension, including:

    (i) a revolvable input disk having a diameter slightly less than the diameter of the cover, seated atop the wall of the spring-retaining disk about the hub, capable of revolving the spring-retaining disk when tightly compressed against the top of the wall, including an inset groove to mate with the wall so that the wall revolves in the groove when the tape measure is assembled, and including stabilizers projecting upwardly from the input disk and the cover plate to reduce wobble of the input disk,

(ii)  a generally disk-shaped cover plate having a diameter slightly less than the diameter of the cover and capable of revolving the input disk and, in turn, the spring-retaining disk when compressed tightly against the input disk and revolved relative to the cover, and

(iii)  a pair of compression lock rings to hold the cover plate, sandwiching the cover plate and having an outside diameter substantially equal to the diameter of the cover, wherein the lock rings hold the cover plate to prevent rotation of the cover plate during use of the tape; and

(f)  fasteners to join the lock rings and cover in substantially parallel, axially aligned positions, allowing holding of the cover plate tightly between the lock rings during use of the tape and allowing the cover plate to be compressed against the input disk and revolved to adjust the tension of the spring by revolving the cover plate relative to the stationary cover, including a plurality of collars positionable at predetermined locations around the periphery of the cover and lock rings and including a plurality of screws to fasten the lock rings and cover to the collars, wherein the cover plate can be compressed against the input disk and revolved when the screws holding the lock rings are loosened.

7.  A gearless, open-faced, direct-drive, spring-rewound tape measure, comprising:

(a)  a generally disk-shaped dust cover having a central hub-receiving well;

(b)   a revolvable, generally disk-shaped dust cover
      having a diameter slightly less than the diameter
      of the cover and having a centrally disposed hub
      projecting from the side of the cover plate substantially perpendicular to the cover plate and
      having an end receivable in the well of the
      cover;

(c)   a revolvable, spring-retaining disk having a
      diameter slightly less than the diameter of the
      cover, seated on the cover about the hub of the
      cover plate, and having a spring-retaining well
      which has an outer periphery that is defined by
      an upraised wall, the wall being substantially
      concentric with the disk and having at least one
      slot;

(d)   a spiral spring retained within the well of the
      spring-retaining disk and having two ends, one
      end being fixed to the hub;

(e)   a tape attached to the other end of the spring,
      passing through the slot in the wall, and wound
      about the outer periphery of the wall;

(f)   a revolvable disk having a diameter slightly less
      than the diameter of the cover, seated atop the
      wall of the spring-retaining disk about the hub
      to reduce friction between the spring-retaining
      disk and the cover plate when the tape is withdrawn;

(g)   a pair of compression lock rings to hold the
      cover plate, sandwiching the cover plate and
      having an outside diameter substantially equal to
      the diameter of the cover, wherein the lock rings
      hold the cover plate to prevent rotation of the
      cover plate during use of the tape; and

(h)   fasteners to join the lock rings and cover in
      substantially parallel, axially aligned positions,
      allowing holding of the cover plate tightly between the lock rings during use of the tape and
      allowing the cover plate to be revolved to adjust
      the tension of the spring.

**FIG. 1**

**FIG. 2**

**FIG. 3**

**FIG. 4**